# EUROPEAN PATENT APPLICATION

(11) **EP 4 502 419 A1**
(43) Date of publication of application: **05.02.2025**
(21) Application number: 24186576.5
(22) Date of filing: 04.07.2024
(51) Int. Cl.: F16H 7/12, B65G 23/44

(54) **TENSIONING SYSTEMS AND METHODS**

(30) Priority: 02.08.2023 US 202318364134
(71) Applicant: Intelligrated Headquarters LLC, Mason, OH 45040 (US)
(72) Inventor: HRABÁLEK, Zdenek, Charlotte, 28202 (US); TOCHACEK, Jakub, Charlotte, 28202 (US)
(74) Representative: Haseltine Lake Kempner LLP

(57) **Abstract**

Methods, systems, and/or the like are provided. In some embodiments, a tensioning system includes one or more pulleys, wherein at least one of the one or more pulleys is configured to drive one or more rollers of a conveyor system; a timing belt, wherein the timing belt is operably engaged with the one or more pulleys, wherein the timing belt is configured to control one or more motion profiles of the one or more rollers of the conveyor system; a tensioner, wherein the tensioner is configured to increase or decrease a tension of the timing belt; and a bracket, wherein the bracket is connected to the tensioner and configured to move relative to the one or more pulleys such that the tension of the timing belt increases or decreases.

## Description

### TECHNICAL FIELD

The present disclosure relates generally to tensioning systems. In particular, it relates to a tensioning system for tensioning a timing belt.

### BACKGROUND

Timing belts for conveyor systems and/or the like must maintain a desired tension throughout operation or else the conveyor's performance may be negatively impacted (e.g., increased noise, damage to the drive components, reduced timing belt life). In cases where it is not possible to move the drive or driven pulley to tension the timing belt, an internal pulley may be used to tension the timing belt, but this requires an additional component and may cause time delays and lead to inefficiencies. An additional pulley (internal) also takes up space that could be used for other components.

Through applied effort, ingenuity, and innovation, Applicant has solved problems relating to tensioning systems by developing solutions embodied in the present disclosure, which are described in detail below.

### SUMMARY

In general, embodiments of the present disclosure provide methods, systems, and/or the like.

In accordance with various embodiments of the present disclosure, there is provided a tensioning system including one or more pulleys, wherein at least one of the one or more pulleys is configured to drive one or more rollers of a conveyor system; a timing belt, wherein the timing belt is operably engaged with the one or more pulleys, wherein the timing belt is configured to control one or more motion profiles of the one or more rollers of the conveyor system; a tensioner, wherein the tensioner is configured to increase or decrease a tension of the timing belt; and a bracket, wherein the bracket is connected to the tensioner and configured to move relative to the one or more pulleys such that the tension of the timing belt increases or decreases.

In some embodiments, the tensioning system includes a housing, wherein the housing is fixedly attached to the frame of the conveyor, and wherein one or more of the one or more pulleys, the bracket, and the timing belt are disposed on or within the housing.

In some embodiments, the one or more motion profiles include a rotation speed and a rotation direction.

In some embodiments, the tensioner is configured to receive the timing belt on a top portion of the tensioner.

In some embodiments, the system further includes a mounting splice fixedly attached to a frame of the conveyor system, wherein the bracket is connected to the mounting splice.

In some embodiments, the mounting splice is disposed at least partially between the housing and the frame of the conveyor system.

In some embodiments, the system further includes an adjustment mechanism, wherein the adjustment mechanism is configured to selectively disconnect and connect the bracket from the frame of the conveyor system such that the bracket thereby moves relative to the one or more pulleys such that the tension of the timing belt increases or decreases.

In some embodiments, the adjustment mechanism includes a nut and tensioner bolt.

In some embodiments, the bracket includes one or more bracket slots configured to receive one or more fasteners, wherein the mounting splice includes one or more splice slots configured to receive the one or more fasteners, and wherein the bracket slots are aligned with the splice slots.

In some embodiments, the one or more bracket slots are elongated slots, and wherein the bracket is configured to move relative to the one or more fasteners when the adjustment mechanism selectively disconnects and connects the bracket from the frame.

According to various embodiments, there is provided a conveyor system including a conveyor having a frame and one or more rollers; one or more pulleys, wherein at least one of the one or more pulleys is configured to drive one or more rollers of a conveyor system; a timing belt, wherein the timing belt is operably engaged with the one or more pulleys, and wherein the timing belt is configured to control one or more motion profiles of the one or more rollers of the conveyor system; a tensioner, wherein the tensioner is configured to increase or decrease a tension of the timing belt; and a bracket, wherein the bracket is connected to the tensioner and configured to move relative to the one or more pulleys such that the tension of the timing belt increases or decreases.

In some embodiments, the one or more motion profiles include a rotation speed and a rotation direction.

In some embodiments, the tensioner is configured to receive the timing belt on a top portion of the tensioner.

In some embodiments, the system includes a mounting splice fixedly attached to a frame of the conveyor system, wherein the bracket is connected to the mounting splice.

In some embodiments, the system includes a housing, wherein the housing is fixedly attached to the frame of the conveyor system, and wherein one or more of the one or more pulleys, and the timing belt are disposed on or within the housing.

In some embodiments, the system includes an adjustment mechanism, wherein the adjustment mechanism is configured to selectively disconnect and connect the bracket from a frame of the conveyor system such that the bracket thereby moves relative to the one or more pulleys such that the tension of the timing belt increases or decreases.

In some embodiments, the adjustment mechanism includes a nut and a tensioner bolt.

In some embodiments, the bracket includes one or more bracket slots configured to receive one or more fasteners, wherein the mounting splice includes one or more splice slots configured to receive the one or more fasteners, and wherein the bracket slots are aligned with the splice slots.

In some embodiments, the one or more bracket slots are elongated slots, and wherein the bracket is configured to move relative to the one or more fasteners when the adjustment mechanism selectively disconnects and connects the bracket from the frame.

In accordance with various embodiments, there is provided a method of using a tensioning system, the method including loosening an adjustment mechanism such that a bracket fixedly attached to a tensioner may be moved relative to one or more pulleys operably engaged with a timing belt; moving the bracket relative to the one or more pulleys such that the tensioner operably engages with the timing belt and increases or decreases a tension in the timing belt; and tightening an adjustment mechanism such that the bracket is fixed relative to the one or more pulleys.

The above summary is provided merely for purposes of summarizing some example embodiments to provide a basic understanding of some embodiments of the disclosure. Accordingly, it will be appreciated that the above-described embodiments are merely examples. It will be appreciated that the scope of the disclosure encompasses many potential embodiments in addition to those here summarized, some of which will be further described below.

### BRIEF DESCRIPTION OF THE SEVERAL VIEWS OF THE DRAWING(S)

Having thus described the disclosure in general terms, reference will now be made to the accompanying drawings, which are not necessarily drawn to scale, and wherein:
FIG. 1 shows a side angled view of an example tensioning system in accordance with various embodiments of the present disclosure;
FIG. 2 shows an isometric view of an example tensioning system installed in example conveyor in accordance with various embodiments of the present disclosure;

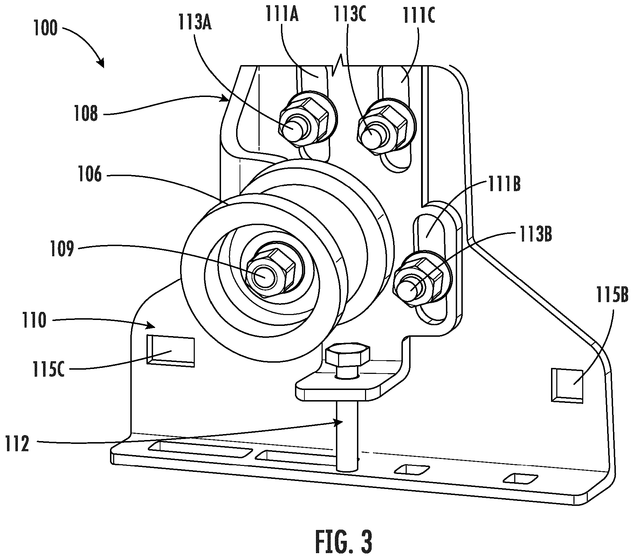

FIG. 3 shows a detail, isometric view of an example tensioning system in accordance with various embodiments of the present disclosure;
FIGS. 4A-4C show various angled views of an example tensioning system in accordance with various embodiments of the present disclosure; and
FIG. 5 is a flow chart illustrating an example method using a tensioning system in accordance with various embodiments of the present disclosure.

### DETAILED DESCRIPTION OF SOME EXAMPLE EMBODIMENTS

Various embodiments of the present disclosure now will be described more fully hereinafter with reference to the accompanying drawings, in which some, but not all embodiments of the disclosure are shown. Indeed, this disclosure may be embodied in many different forms and should not be construed as limited to the embodiments set forth herein; rather, these embodiments are provided so that this disclosure will satisfy applicable legal requirements. The term "or" (also designated as "/") is used herein in both the alternative and conjunctive sense, unless otherwise indicated. The terms "illustrative" and "exemplary" are used to be examples with no indication of quality level. Like numbers may refer to like elements throughout. The phrases "in one embodiment," "according to one embodiment," and/or the like generally mean that the particular feature, structure, or characteristic following the phrase may be included in at least one embodiment of the present disclosure and may be included in more than one embodiment of the present disclosure (importantly, such phrases do not necessarily may refer to the same embodiment).

### Overview

According to various embodiments, there is provided a tensioning system for tensioning a timing belt.. The timing belt may be for a conveyor system having one or more rollers disposed on or within a conveyor frame. The timing belt may be wrapped at least partially around a tensioner. The timing belt may also be wrapped at least partially around one or more drive pulleys and one or more driven pulleys, and the timing belt may be configured to control a motion profile of the one or more rollers (e.g., speed and/or direction of rotation). The tensioning system may include a bracket connected to the tensioner, which may be operably engaged with the timing belt. The bracket may be secured to the conveyor frame via one or more fasteners (e.g., bolts and nuts).

In some embodiments, the tensioning system may also include a mounting splice, and the bracket may be mounted on the mounting splice. The tension of the timing belt may be adjusted by adjusting the position of the bracket relative to the mounting splice. The bracket's position may be adjusted by loosening and/or removing the one or more fasteners, raising or lowering the bracket relative to the mounting splice, and then tightening and/or reattaching the one or more fasteners. In some embodiments, when the tensioning bracket is raised relative to the mounting splice, the tensioner may also be raised and cause the timing belt to tighten (increase tension); when the tensioning bracket is lowered relative to the mounting splice, the tensioner may also be lowered and cause the timing belt to loosen (decrease tension).

### Example Tensioning Systems and Conveyor Systems

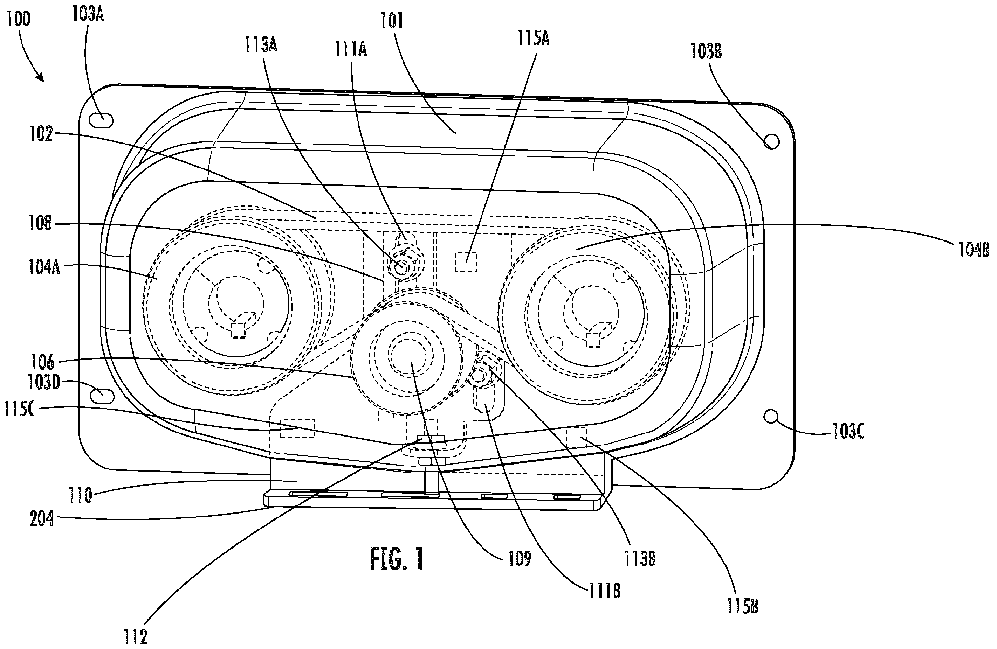

FIG. 1 shows, according to various embodiments, an example tensioning system 100. In some embodiments, the tensioning system 100 may be configured to increase and/or decrease the tension of a timing belt 102. The timing belt 102 may be operably engaged with one or more pulleys 104A, 104B. The timing belt 102 may be a toothed belt, with teeth configured to match teeth of the one or more pulleys 104A, 104B. In some embodiments, the example tensioning system 100 may include a drive mechanism (e.g., a motor, like a stepper motor) configured to drive the one or more pulleys 104A, 104B in conjunction with the timing belt 102. The timing belt 102 may be a variety of timing belts as desired and may be selected to have a desired pitch, teeth type, length, width, coating, cleats, and/or attachments.

In some embodiments, at least one of the one or more pulleys (e.g., 104B) may be a drive pulley configured to drive one or more other pulleys (e.g., 104A) of the one or more pulleys. Two pulleys are shown in the various figures, but it will be understood that the system 100 may include greater than or fewer than two pulleys. In some embodiments, the tensioning system 100 may include a housing 101. The housing 101 may be configured to contain one or more components of the tensioning system 100. The housing 101 is shown as being open, but it will be understood that a roof or other covering device may be placed over the housing to protect one or more of the components of the tensioning system 100. In some embodiments, the housing 101 may include one or more attachment points 103A-D configured to receive one or more fasteners and thereby attach the housing 101 to a frame 204 of a conveyor 200 and/or the like.

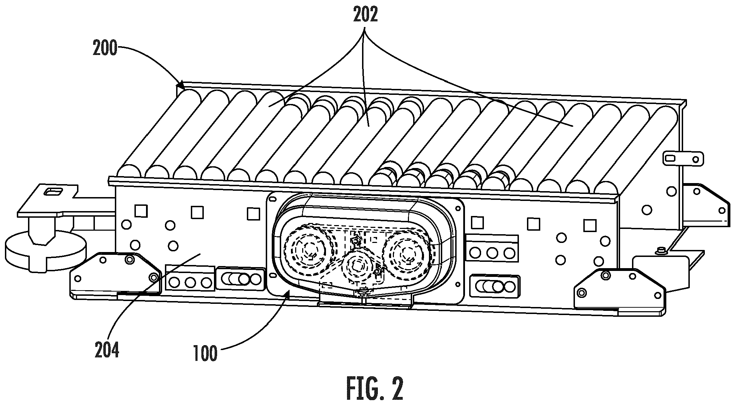

In some embodiments, the tensioning system 100 may be coupled to, installed on, or otherwise integrated with a conveyor system 200, as shown in at least FIG. 2. The one or more pulleys 104A, 104B may be configured to drive one or more rollers 202 disposed on or within a frame 204 of the conveyor system 200. The timing belt 102 may be configured to control, at least in part, one or more motion profiles of the one or more rollers, including the rotation speed, rotation direction, positioning, and/or alignment of the one or more rollers 202. In some embodiments, the tension of the timing belt 102 may affect the positioning and/or alignment of the one or more rollers. For example, if the tension of the timing belt is too high, the one or more rollers 202 (and/or one or more bearings engaged with the rollers 202) may undergo undue levels of stress; further, the timing belt 102 may begin to stretch and wear and require replacement. As another example, if the tension of the timing belt is too low, the timing belt 102 may loosen and the rollers 202 may become misaligned, potentially delaying the conveyor system 200 and/or damaging one or more components of the conveyor system 200.

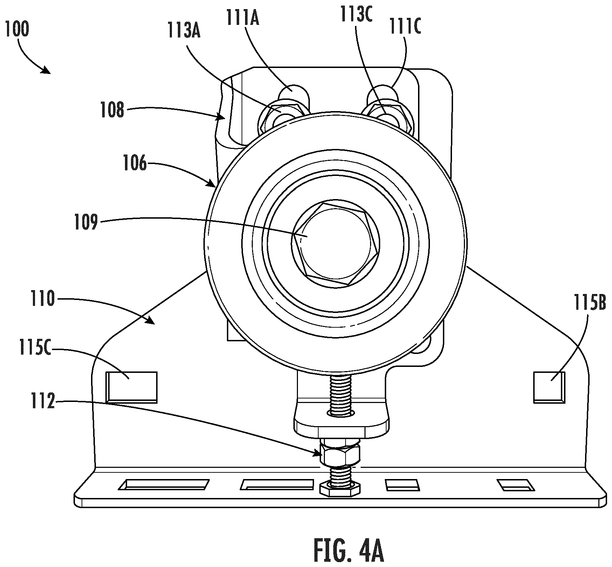

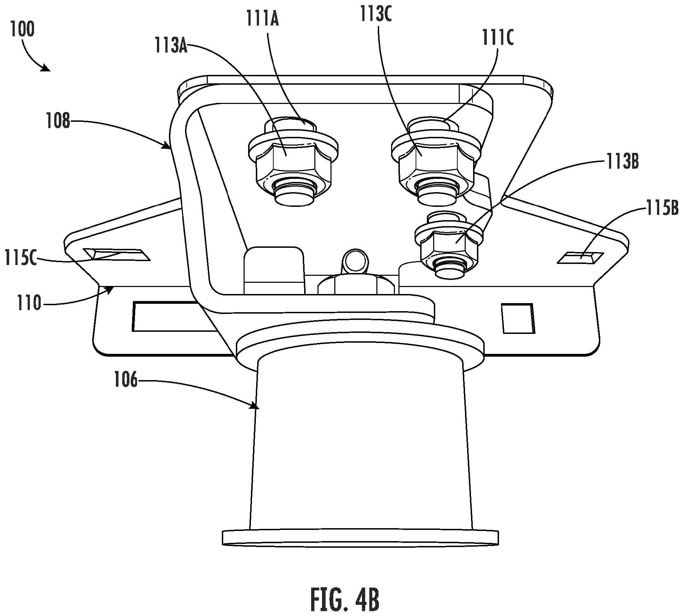

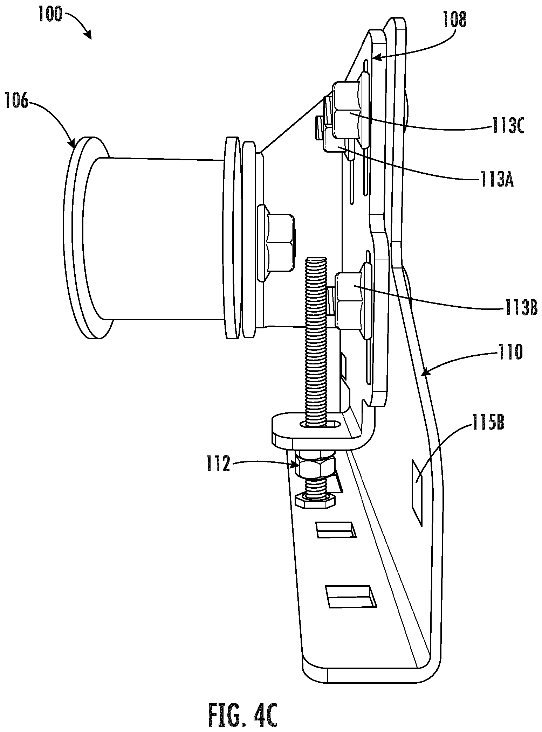

Referring again to FIG. 1, but also to FIGS. 4A-4C in some embodiments, the tensioning system 100 may include a tensioner 106. The tensioner 106 may be a tensioning pulley. The tensioner 106 may be operably engaged with the timing belt 102. In some embodiments, the timing belt 102 may be at least partially wrapped around the tensioner 106. In some embodiments, the timing belt 102 may be disposed on a top portion of the tensioner 106. In some embodiments, the tensioner 106 may be engaged with the timing belt 102 such a tension of the timing belt 102 may be increased or decreased by the tensioner 106.

In some embodiments, the tensioning system 100 may include a bracket 108. In some embodiments, the bracket 108 may comprise one or more flanges. The bracket 108 may be a substantially planar, metallic piece having one or more slots 111A-C. One or more mounting fasteners 113A-C may be disposed through the one or more slots 111A-C to secure the bracket 108 to the conveyor frame 204. In some embodiments, the one or more slots 111A-C may be elongated slots, and the bracket 108 may be configured to move along the slots 111A-C depending on how tightly the one or more mounting fasteners 113A-C are installed. The tensioner 106 may be fixedly attached to the bracket 108 by one or more tensioner fasteners 109.

In some embodiments, the tensioning system 100 may include a mounting splice 110. The mounting splice 110 may be similar to the bracket 108 in that it may be a substantially planar, metallic piece having one or more slots 115A, 115B, 115C. The mounting splice may also include one or more flanges. In some embodiments, one or more of the one or more slots 115A-C of the mounting splice 110 may be aligned with one or more of the one or more slots 111A-C of the bracket 108. The mounting splice 110 may be connected (e.g., via the one or more mounting fasteners 113A-C or weldments) to the conveyor frame 204. The mounting splice 110 may be separated, at least in some portions, from the bracket 108 via the housing 101. In some embodiments, the mounting splice 110 and the bracket 108 may be flush. In some embodiments, the mounting splice 110 may be fixed to the conveyor frame 104, while the bracket 108 may be configured to move relative to at least the mounting splice 110.

In some embodiments, the tensioning system 100 may include an adjustment mechanism 112. The adjustment mechanism 112 may operably connect the bracket 108 to the frame 204 of the conveyor system 200. The adjustment mechanism 112 may additionally or alternatively operably connect the bracket 108 to the mounting splice 110. In some embodiments, the adjustment mechanism 112 may be a nut and tension bolt.

In some embodiments, the adjustment mechanism 112 may be loosened or detached such that the bracket 108 may be moved relative to one or more of the one or more pulleys 104A, 104B, the mounting splice 110, and/or the conveyor frame 204. For example, the nut may be loosened and the tension bolt raised or lowered to move the bracket 108; once the bracket 108 has been positioned to a desired location, the nut may be retightened so that the bracket 108 is fixed relative to the one or more pulleys 104A, 104B, the mounting splice 110, and/or the conveyor frame 204.

### Example Methods of Use

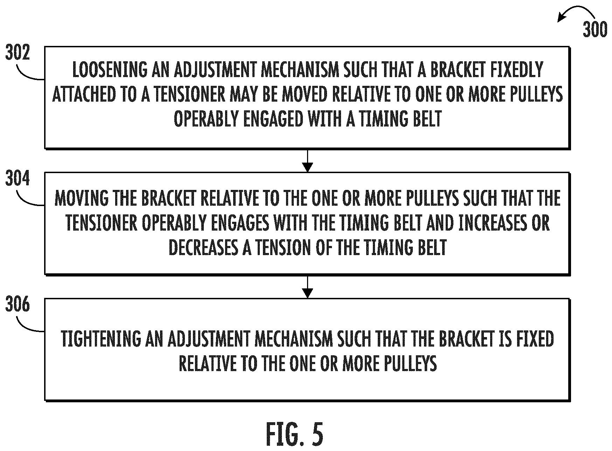

According to various embodiments, FIG. 5 shows a flow chart illustrating an example method 300 of using an example tensioning system. The method 300 is described with respect to the tensioning system 100, the conveyor system 200, and their various components. It will be understood that the method 300 may be implemented with a variety of suitable systems and components, as desired.

In some embodiments, the method 300 may include a step 302 of loosening an adjustment mechanism such that a bracket fixedly attached to a tensioner may be moved relative to one or more pulleys operably engaged with at timing belt.

In some embodiments, the method 300 may include a step 304 of moving the bracket relative to the one or more pulleys such that the tensioner operably engages with the timing belt and increases or decreases a tension of the timing belt.

In some embodiments, the method 300 may include a step 306 of tightening an adjustment mechanism such that the bracket is fixed relative to the one or more pulleys.

Many modifications and other embodiments of the disclosure set forth herein will come to mind to one skilled in the art to which this disclosure pertains having the benefit of the teachings presented in the foregoing descriptions and the associated drawings. Therefore, it is to be understood that the disclosure is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A tensioning system comprising:
one or more pulleys, wherein at least one of the one or more pulleys is configured to drive one or more rollers of a conveyor system;
a timing belt, wherein the timing belt is operably engaged with the one or more pulleys,
wherein the timing belt is configured to control one or more motion profiles of the one or more rollers of the conveyor system;
a tensioner, wherein the tensioner is configured to increase or decrease a tension of the timing belt; and
a bracket, wherein the bracket is connected to the tensioner and configured to move relative to the one or more pulleys such that the tension of the timing belt increases or decreases.

2. The tensioning system of claim 1, further comprising a housing, wherein the housing is fixedly attached to a frame of the conveyor system, and wherein one or more of the one or more pulleys, the bracket, and the timing belt are disposed on or within the housing.

3. The tensioning system of claim 1, wherein the one or more motion profiles comprise a rotation speed and a rotation direction.

4. The tensioning system of claim 1, wherein the tensioner is configured to receive the timing belt on a top portion of the tensioner.

5. The tensioning system of claim 1, further comprising a mounting splice fixedly attached to a frame of the conveyor system, wherein the bracket is connected to the mounting splice.

6. The tensioning system of claim 5, wherein the mounting splice is disposed at least partially between a housing and the frame of the conveyor system.

7. The tensioning system of claim 6, further comprising an adjustment mechanism, wherein the adjustment mechanism is configured to selectively disconnect and connect the bracket from the frame of the conveyor system such that the bracket thereby moves relative to the one or more pulleys such that the tension of the timing belt increases or decreases.

8. The tensioning system of claim 7, wherein the adjustment mechanism comprises a nut and a tensioner bolt.

9. The tensioning system of claim 7, wherein the bracket comprises one or more bracket slots configured to receive one or more fasteners, wherein the mounting splice comprises one or more splice slots configured to receive the one or more fasteners, and wherein the bracket slots are aligned with the splice slots.

10. The tensioning system of claim 9, wherein the one or more bracket slots comprise elongated slots, and wherein the bracket is configured to move relative to the one or more fasteners when the adjustment mechanism selectively disconnects and connects the bracket from the frame.

11. A conveyor system comprising:
a conveyor comprising a frame and one or more rollers; and
the tensioning system of any of claims 1-10.
